# DEMANDE DE BREVET EUROPEEN

(11) **EP 2 000 687 A1**
(43) Date de publication de la demande: **10.12.2008**
(21) Numéro de dépôt: 08157679.5
(22) Date de dépôt: 05.06.2008
(51) Int. Cl.: F16D 3/04

(54) **Pièce formant noix d'Oldham**

(30) Priorité: 07.06.2007 FR 0755570
(71) Demandeur: Compagnie Plastic Omnium, 69007 Lyon (FR)
(72) Inventeur: Agnus, Bruno, 52000 CHAMARANDES-CHOIGNES (FR)
(74) Mandataire: Potdevin, Emmanuel Eric

(57) **Abrégé**

L'invention concerne une pièce (10) formant noix d'Oldham comprenant deux orifices (12, 14) de section allongée et coaxiaux prévus chacun pour la réception d'un arbre rotatif. La pièce (10) est asymétrique par rapport à deux plans (16, 18) comprenant chacun l'axe des orifices et la direction longitudinale de la section des orifices (12, 14).

## Description

La présente invention concerne le domaine des noix d'Oldham, notamment des noix d'Oldham en matière plastique.

Une telle pièce est couramment utilisée dans des véhicules automobiles, notamment dans le système de direction assistée, et a pour fonction de fournir une transmission homocinétique entre deux arbres rotatifs en vis-à-vis dont les axes ne sont pas rigoureusement coaxiaux, ce qui interdit de les solidariser par une liaison rigide.

Cette pièce est de forme extérieure essentiellement cylindrique et comporte un premier orifice de section allongée ménagé dans une première moitié du cylindre,et débouchant sur une première base de celui-ci, et un second orifice de section allongée ménagé dans une seconde moitié du cylindre, débouchant sur une seconde base de celui-ci, opposée à la première. Les directions longitudinales des sections des deux orifices sont perpendiculaires et les deux orifices sont coaxiaux.

La section de chaque orifice est selon un plan normal à l'axe commun aux deux orifices.

La pièce réalise ainsi un accouplement entre les deux arbres engagés chacun dans un orifice, chaque arbre étant lui-même de section allongée de façon à être bloqué en rotation dans son orifice mais libre de glisser selon la direction longitudinale de celui-ci.

Couramment, cette pièce est réalisée en métal.

On connaît toutefois un telle pièce réalisée en matière plastique, en particulier en PEEK (Polyétheréthercétone), possédant des propriétés mécaniques très satisfaisantes permettant de résister à toutes les sollicitations subies par une noix d'Oldham.

Une difficulté mineure est toutefois apparue avec les pièces en matière plastique : il se produit un retrait non négligeable lors du refroidissement de la pièce, à l'issue de son moulage par injection.

Or, les importantes variations d'épaisseur de matière plastique en différents points de la pièce, du fait de la présence d'orifices de section allongée dans la forme cylindrique extérieure de la pièce, entraînent des différences de retrait, lesquelles différences engendrent des défauts de forme et des retassures, gênants compte tenu du niveau de précision dimensionnelle souhaité pour ce type de pièce.

Dans la présente description, on définit par l'expression « épaisseur de matière plastique en un point de la pièce », la dimension minimale de la matière plastique au voisinage de ce point selon toutes les directions passant par ce point.

Ainsi, un taux de rebut relativement important est constaté lors de la fabrication de telles pièces, ce qui n'affecte pas la qualité des pièces acceptées mais augmente leur prix de revient unitaire.

La présente invention a pour objet de diminuer le rebut lors de la fabrication.

L'invention a pour objet une pièce formant noix d'Oldham caractérisée en ce qu'elle comprend deux orifices de section allongée et coaxiaux prévus chacun pour la réception d'un arbre rotatif, la pièce étant asymétrique par rapport à au moins un plan comprenant l'axe commun des orifices et la direction longitudinale de la section d'un des orifices.

Les noix d'Oldham ont toujours été conçues de façon symétrique pour des raisons historiques, notamment du fait qu'à l'origine, le matériau utilisé pour de telles pièces était du métal et qu'il est plus facile d'usiner une pièce métallique lorsque cette pièce est symétrique. Cette habitude n'a jamais été remise en question.

Les inventeurs à la base de l'invention ont surmonté ce préjugé et ont imaginé que, les contraintes subies par la pièce n'étant pas symétriques, une distribution asymétrique de matière pouvait permettre, à performance égale, de réduire l'épaisseur de la pièce en de nombreux endroits, et de ne la renforcer qu'aux endroits où elle est le plus sollicitée mécaniquement.

A cahier des charges identique, une pièce selon l'invention comprend donc moins de matière qu'une pièce de l'état de la technique.

Avec une configuration asymétrique, il est donc possible d'obtenir une pièce performante dans laquelle l'épaisseur de matière est globalement diminuée. On peut ainsi atténuer, voire éliminer, les défauts de fabrication et diminuer fortement le taux de rebut.

De plus, la pièce selon l'invention est à la fois plus légère et plus économique.

La pièce selon l'invention peut également comprendre une ou plusieurs des caractéristiques de la liste suivante :
- la pièce comporte, autour de chaque orifice, une alternance de parties renforcées et de parties non renforcées,
- un orifice de la pièce est prévu pour la réception d'un arbre moteur et la pièce est conformée de sorte que, du côté moteur, les quartiers de la pièce étant désignés de premier à quatrième quartier, à partir d'une extrémité longitudinale de la section de l'orifice moteur, dans un ordre croissant selon le sens de rotation de l'arbre moteur, les parties renforcées sont agencées dans les premier et troisième quartiers de la pièce.

Ainsi, lorsque l'arbre moteur est en rotation, il entraîne la pièce en exerçant sur les parois des premier et troisième quartiers une contrainte entraînant leur compression. Les parties renforcées correspondent aux parois en compression et donc aux parties les plus sollicitées de la pièce.
- un orifice de la pièce est prévu pour la réception d'un arbre résistant, et la pièce est conformée de sorte que, du côté résistant, les quartiers de la pièce étant désignés de premier à quatrième quartier à partir d'une extrémité longitudinale de la section de l'orifice résistant, dans un ordre croissant selon le sens de rotation de l'arbre résistant, les parties sont agencées dans les deuxième et quatrième quartiers de la pièce.

Côté résistant, c'est la pièce qui entraîne l'arbre et les parties en compression sont donc les parties correspondant aux deuxième et quatrième quartiers. Les parties renforcées du côté résistant correspondent donc également aux parties les plus sollicitées et permettent d'alléger les autres parties, de façon à optimiser la pièce.
- au moins une partie renforcée a essentiellement la forme d'un quart de cylindre,
- au moins une partie non renforcée comprend une paroi pleine comportant deux surfaces externes essentiellement parallèles,
- la partie non renforcée est de dimension radiale inférieure au plus petit diamètre, de préférence au plus petit rayon de l'orifice. Dans la majorité des application, la dimension radiale de la partie renforcée est inférieure à 4 mm, de préférence à 2 mm. Cela permet de réduire encore l'épaisseur et la quantité de matière de la pièce car cette partie n'est que peu sollicitée,
- une partie renforcée est agencée dans la continuité d'une partie non renforcée adjacente. Ainsi, cela permet de faciliter la conception et la fabrication de la pièce,
- la pièce selon l'invention comprend un élément formant un fond au moins partiel des orifices, pour éviter toute interférence entre les deux arbres,
- la pièce est réalisée en matière plastique, plus particulièrement en un matériau chargé de fibres de verre ou de carbone.

L'homme du métier n'est pas incité à fabriquer une pièce en matière plastique asymétrique, du fait qu'une telle pièce, durant son retrait, peut être légèrement déformée et se voiler. Toutefois, les inventeurs à la base de l'invention se sont aperçus qu'au vu des différences d'épaisseur peu importantes dans la pièce, des matériaux correctement choisis pour la conception de la pièce et un procédé de moulage optimisé de celle-ci, appartenant au savoir-faire de l'homme du métier, suffisaient pour obtenir une pièce asymétrique en matière plastique respectant le cahier des charges.
- le polymère est du PEEK (polyéther éther cétone), du PA (polyamide), du PPA (polyphtalamide), du PPS (polysulfure de phénylène), du PAI (polyamide-imide) ou du PEI (polyétherimide),
- les directions longitudinales des sections des deux orifices, moteur et résistant, sont perpendiculaires. On rappelle que la section de chaque orifice est selon un plan normal à l'axe commun aux deux orifices.

L'invention sera mieux comprise à la lecture de la description qui va suivre, donnée uniquement à titre d'exemple et faite en se référant aux dessins dans lesquels :
- la figure 1 est une vue de trois quarts en perspective de la pièce selon un mode de réalisation particulier,
- la figure 2 est une vue du côté moteur de la pièce de la figure 1,
- la figure 3 est une vue côté résistant de la pièce de la figure 1.

On a représenté sur les figures une pièce formant noix d'Oldham 10, comprenant deux orifices 12, 14 de section allongée et coaxiaux prévus chacun pour la réception d'un arbre rotatif. La pièce 10 est contenue dans une enveloppe géométrique cylindrique.

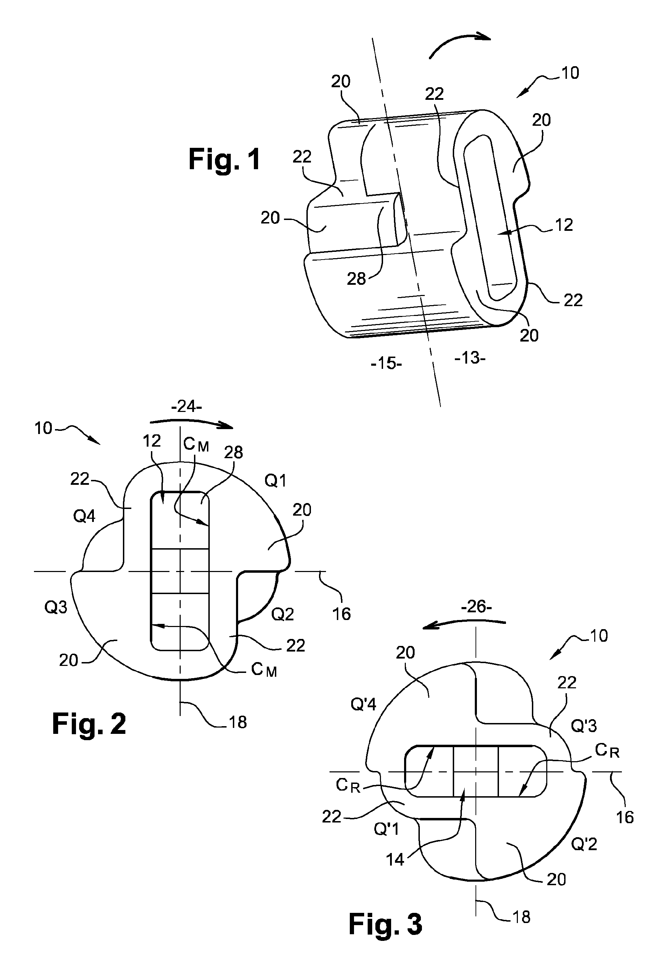

L'orifice 12 représenté à la figure 2 est plus particulièrement prévu pour la réception d'un arbre moteur et l'orifice 14 représenté à la figure 3 est plus particulièrement prévu pour la réception d'un arbre résistant.

L'orifice moteur 12 est ménagé dans une première moitié 13 du cylindre, débouchant sur une première base de celui-ci et l'orifice résistant 14 est ménagé dans une seconde moitié 15 du cylindre débouchant sur une seconde base de celui-ci, opposée à la première. Les orifices 12, 14 sont perpendiculaires, les directions longitudinales de leurs sections étant en particulier perpendiculaires.

Deux plans 16 et 18 sont représentés en pointillés sur les figures 2 et 3. Chacun des plans 16 et 18 comprend l'axe commun des orifices, qui constitue également un axe de symétrie centrale de la pièce. En outre, le plan 16 comprend la direction longitudinale de la section de l'orifice moteur 12 et le plan 18 comprend la direction longitudinale de la section de l'orifice résistant 14. Ainsi, les plans 16 et 18 sont des plans perpendiculaires et sécants en l'axe commun des orifices.

Comme on peut le constater sur les figures, la pièce est asymétrique par rapport à chacun des plans 16 et 18. Plus particulièrement, la pièce comprend une alternance de parties renforcées 20 et de parties non renforcées 22 entourant chaque orifice.

Du côté moteur, la pièce est divisée en quatre quartiers Q1, Q2, Q3, Q4, séparés par les plans 16 et 18, désignés de premier à quatrième quartier à partir d'une extrémité longitudinale de la section de l'orifice moteur 12, dans un ordre croissant selon le sens de rotation 24 de l'arbre moteur. En suivant cette configuration, les parties renforcées sont agencées dans les premier et troisième quartiers Q1, Q3.

Ainsi, lorsque l'arbre moteur tourne, il entraîne la pièce 10 en exerçant un couple C_{M} représenté sur la figure 2 sur la pièce 10 du côté moteur. La pièce est donc en compression relativement au sens de rotation 24 du côté moteur et l'on voit que la pièce 10 est sollicitée dans les quartiers Q1 et Q3. Les parties renforcées 20 sont placées dans les zones les plus sollicitées de la pièce.

De même, du côté résistant, la pièce comporte quatre quartiers Q'1, Q'2, Q'3, Q'4 séparés par les plans 16 et 18 et désignés de premier à quatrième quartier à partir d'une extrémité longitudinale de la section de l'orifice résistant 14, dans un ordre croissant selon le sens de rotation 26 de l'arbre résistant. La pièce 10 est conformée pour que les parties renforcées 20 soient agencées dans les deuxième et quatrième quartiers Q'2, Q'4 de la pièce.

Ainsi, lorsque la pièce est en rotation, selon le sens de rotation 26 du côté résistant, la pièce 10 entraînant l'arbre résistant, ce dernier exerce un couple résistant C_{R} sur la pièce.

Comme on le voit sur la figure 3, le couple s'exerce en plus grande partie dans les quartiers Q'2 et Q'4. Les parties renforcées 20 sont donc présentes là où la pièce est le plus sollicitée.

Les parties renforcées 20, du côté résistant comme du côté moteur, sont essentiellement en forme de quart de cylindre, de diamètre supérieur à la dimension de l'orifice, respectivement 12, 14, selon sa direction longitudinale. Elles sont agencées, du côté moteur, dans la continuité d'une partie non renforcée 22 adjacente.

Les parties non renforcées 22 comprennent une paroi pleine dont les surfaces externes sont essentiellement parallèles et d'épaisseur, dans leur dimension radiale, inférieure au rayon le plus petit de la pièce, soit pour les applications courantes, inférieure à 4 mm, de préférence à 2 mm.

La pièce, selon ce mode de réalisation de l'invention, comprend également un fond partiel 28 pour les orifices 12, 14 et sur lesquels les parties renforcées du côté moteur et du côté résistant se superposent de façon à donner une cohésion à la pièce. Ce fond permet de renforcer encore une partie de la pièce très sollicitée, c'est-à-dire sa partie intermédiaire, sollicitée en cisaillement du fait de la direction opposée des couples appliqués sur celle-ci, selon la moitié 13, 15 de la pièce.

La pièce, selon ce mode de réalisation, est réalisée en matière plastique, notamment en un matériau polymère chargé de fibres de verre ou de carbone. Ce matériau polymère peut être notamment du PEEK (polyétheréthercétone).

Ainsi, la pièce selon l'invention est une pièce fonctionnant de façon optimale pour un seul sens de rotation de l'arbre moteur mais qui permet, du fait de sa conception asymétrique, de renforcer les zones les plus sollicitées et d'éviter les problèmes de retrait, car ce renfort entraîne la réduction des variations d'épaisseur. En outre, si les orifices 12 et 14 sont de taille identique, une telle pièce peut être montée sans détrompage.

De plus, le gain en poids par rapport à une pièce de même dimension selon l'état de la technique est de 40 % et l'économie de matière et de coûts de fabrication est importante.

On notera que le mode de réalisation décrit n'est pas limitatif. En variante, la pièce peut être fabriquée en d'autres matériaux tels que le polyamide, le polyphtalamide, le polysulfure de phénylène, le polyamide-imide ou le polyétherimide. Les formes des parties renforcées et non renforcées, ainsi que celles des orifices, peuvent également varier.

## Revendications

1. Pièce (10) formant noix d'Oldham **caractérisée en ce qu'**elle comprend deux orifices (12, 14) de section allongée et coaxiaux prévus chacun pour la réception d'un arbre rotatif, la pièce (10) étant asymétrique par rapport à au moins un plan (16, 18) comprenant l'axe commun des orifices et la direction longitudinale de la section d'un des orifices (12, 14).

2. Pièce (10) selon la revendication précédente, comportant, autour de chaque orifice (12, 14), une alternance de parties renforcées (20) et non renforcées (22).

3. Pièce (10) selon la revendication précédente, dans laquelle un orifice (12) est prévu pour la réception d'un arbre moteur, la pièce (10) étant conformée de sorte que, du côté moteur, les quartiers de la pièce étant désignés de premier à quatrième quartier (Q1, Q2, Q3, Q4), à partir d'une extrémité longitudinale de la section de l'orifice moteur (12), dans un ordre croissant selon le sens de rotation (24) de l'arbre moteur, les parties renforcées (20) sont agencées dans les premier et troisième quartiers (Q1, Q3) de la pièce.

4. Pièce (10) selon l'une quelconque des revendications 2 et 3, dans laquelle un orifice (14) est prévu pour la réception d'un arbre résistant, la pièce (10) étant conformée de sorte que, du côté résistant, les quartiers de la pièce étant désignés de premier à quatrième quartier (O'1, Q'2, Q'3, Q'4), à partir d'une extrémité longitudinale de la section de l'orifice résistant (14), dans un ordre croissant selon le sens de rotation (26) de l'arbre résistant, les parties renforcées (20) sont agencées dans les deuxième et quatrième quartiers de la pièce (Q'2, Q'4).

5. Pièce (10) selon l'une quelconque des revendications 3 ou 4, dans laquelle au moins une partie renforcée (20) a essentiellement la forme d'un quart de cylindre.

6. Pièce (10) selon l'une quelconque des revendications précédentes, dans laquelle au moins une partie non renforcée (22) comprend une paroi pleine, comportant deux surfaces externes essentiellement parallèles.

7. Pièce (10) selon la revendication précédente, dans laquelle la partie non renforcée (22) est de dimension radiale inférieure au plus petit diamètre, notamment au plus petit rayon de l'orifice (12, 14).

8. Pièce (10) selon les revendications 2 à 7, dans laquelle une partie renforcée (20) est agencée dans la continuité d'une partie non renforcée (22) adjacente.

9. Pièce (10) selon l'une quelconque des revendications précédentes, réalisée en matière plastique, plus particulièrement en matériau polymère chargé de fibres de verre ou de carbone.

10. Pièce (10) selon la revendication précédente, dans laquelle le polymère est du PEEK (Polyetherethercétone), du PA (Polyamide), du PPA (Polyphtalamide), du PPS (Polysulfure de Phénylène), du PAI (Polyamide-imide) ou du PEI (Polyetherimide).

11. Pièce (10) selon l'une quelconque des revendications précédentes, dans laquelle les directions longitudinales des sections des deux orifices (12, 14) sont perpendiculaires.
